# EUROPEAN PATENT APPLICATION

(11) **EP 2 450 674 A1**
(43) Date of publication of application: **09.05.2012**
(21) Application number: 10783639.7
(22) Date of filing: 21.01.2010
(51) Int. Cl.: G01F 1/66

(54) **METHOD FOR MEASURING THE FLOW RATE OF FLUID MEDIA AND AN ULTRASONIC FLOWMETER (EMBODIMENTS)**

(30) Priority: 01.06.2009 RU 2009120705
(71) Applicant: Obschestvo S Ogranichennoi Otvetstvennostyu "Nauchno-Proizvodstvennoe Predpriyatie "Uraltehnologiya"", Ekaterinburg 620137 (RU)
(72) Inventor: The designation of the inventor has not yet been filed
(74) Representative: Sloboshanin, Sergej
(86) International application number: PCT/RU2010/000027
(87) International publication number: WO 2010/140921

(57) **Abstract**

The inventions relate to measurement engineering and can be used in measuring devices for measuring the flow rate of a fluid using ultrasound. The essence of the invention is as follows: an ultrasonic wave is emitted both along a flow path and counter to said flow path by piezoelectric transducers 2(10) and 3(11). The received ultrasonic wave from the piezoelectric transducers 2(10) and 3(11) is converted into an electric signal. On the basis of the positive half-waves of the electric signal, a comparator 6(14) forms a sequence of rectangular pulses having the same amplitude and containing information about the transmission time of the ultrasonic waves in both directions. The ultrasonic wave is converted into a sinusoidal electric signal so that the first half-wave thereof is always positive. In a first embodiment of the flowmeter, the electric signal is inverted after having been transmitted via a receiving-amplifying path (5). In a second embodiment, one of the piezoelectric transducers (10, 11) is connected to the corresponding inputs-outputs of a controlled switch (12) by an electrode, the polarity of which is opposite to that of the other transducer. The technical result is an increase in the accuracy with which the flow rate of fluid media is measured by eliminating error caused by the Doppler effect.

## Description

The inventions relate to measurement engineering and can be used in measuring devices for measuring the flow rate of a fluid using ultrasound.

A method for measuring the flow rate of fluid media is known, realised in an ultrasonic flowmeter, including the emission of an ultrasonic wave along the flow path and counter to it, the conversion of the ultrasonic wave into an electric sinusoidal signal with its subsequent conversion into a sequence of rectangular pulses with the same amplitude by means of a comparator with a set reference signal level, wherein the comparator is operative only during the time when the desired signal is effective at its input (Patent RU 2106602, G06F1/66, March 10, 1998).

The method renders it possible to reduce the influence of noise signals on the accuracy of the fluid flow rate measurement by controlling the comparator inputs, which reduces the influence of the accumulation of noise interferences on the measuring accuracy. However, the likelihood of a false response of the comparator due to the impact of outside interferences remains sufficiently high, which necessitates the use of a precise setting of the reference voltage level on the comparator. Moreover the known method does not take a possible instability of the information signal amplitude into account, namely a random amplitude increase, caused by noise interferences and also caused by an instability of the electrical parameters of the piezo elements of the transducers, the one forming the ultrasonic wave in the fluid under investigation as well as the one receiving it and converting it into an electric signal.

The necessity to take into account the possibility of an amplitude increase of the information signal at the comparator input is explained by the fact that in the process of the conversion of the input information sinusoidal signal by the comparator into a sequence of unipolar rectangular pulses, in case of an increase of the input signal amplitude there is a shift of the rising edges of the output signal of the comparator, that is, a "zero drift" effect occurs, which results in an error in the determination of the transmission time of the test signal. Since the transmission time of the signal along and counter to the flow path of the medium under investigation is very short and totals from several fractions of a nanosecond up to several hundred nanoseconds, the error caused by an amplitude increase of the information signal will be perceptible, which reduces the measuring accuracy.

The most pertinent prior art is a method for measuring the flow rate of fluid media realised in an ultrasonic flowmeter according to Utility Model RU 68148, G06F1/00, November 10, 2007. The method comprises the emission of an ultrasonic wave along the flow path and counter to it, the conversion of the ultrasonic wave into an electric signal in the form of periodic damping sinusoidal oscillations with its subsequent conversion into a sequence of rectangular pulses with the same amplitude, measuring the transmission time of the ultrasonic waves in both directions, wherein the sequence of rectangular pulses is formed from the half-waves of the electric signal which are situated above the axis of symmetry of the signal (positive half-wave), wherein the rising edge of the first pulse is formed at the moment when the first positive half-wave crosses the axis of symmetry as its amplitude rises and until its amplitude reaches its maximum, whereas its falling edge is formed at the moment when the first positive half-wave of the sinusoidal signal crosses the axis of symmetry as its amplitude falls, wherein the rising and falling edges of subsequent rectangular pulses are formed at the moments when the positive half-waves cross the axis of symmetry correspondingly during the rise and fall of the signal amplitude.

Unlike the previous prior art, the method renders it possible to increase the accuracy of the measurement of the fluid flow rate by eliminating the uncertainty caused by the instability of the information signal amplitude, namely by the random character of the increase of the information signal amplitude. However, both prior arts share a shortcoming, namely, for the fluid flow rate measurement they do not allow to take into account the error induced by the "Doppler effect".

The "Doppler effect" lies in the change in the wavelength λ (or the oscillation .frequency) perceived by an observer when the source of the waves and the observer move with respect to one another. When the source approaches the observer, λ, decreases (and the oscillation frequency increases), while when the distance grows, λ increases (and the oscillation frequency decreases) to a value of λ- λ₀ = λ₀ V/v, wherein λ₀ is the length of the source wave, v is the wave propagation speed, V is the relative speed of the movement of the source. The "Doppler effect" renders it possible to measure the speed of movement of a radiation source. (Novaya illustrirovannaya entsiklopediya, Da-Zha, Moscow, OOO "TD Izdatel'stvo Mir knigi, 2006, p. 165.)

Thus, since the fluid whose flow rate is determined is moving, in the measuring of its flow rate there is always the "Doppler effect" involved. As a result, the electric signal created by the piezoelectric transducer contains information about the flow rate of the fluid medium taking into account the speed of its movement, in accordance with the "Doppler effect".

In the known methods, according to the implementation of the methods, the analysis of the ultrasonic test signal converted into an electric one begins with its first positive half-wave, while in the electric signals formed by the piezoelectric transducers, due to the particularities of their function the first half-wave is always negative. As shown above, the "Doppler effect" can be manifest in an increase of the oscillation frequency (signal shrinks) as well as in a decrease (signal expands). As a result, the beginning of the positive half-wave of the electric signal following a negative half-wave shifts over time, which introduces an uncertainty into the measuring error caused by the "Doppler effect". In a stationary process, that is, when the moving speed of the fluid is constant and the place where the piezo elements are arranged is constant, this error is the same and is also constant for both piezo transducers and is compensated in the calculation of the flow rate of the monitored fluid medium. However, the transmission time of the signal along and counter to the flow path of the medium under investigation is very small and totals from several fractions of a nanosecond up to several hundred nanoseconds. Hence in a non-stationary process, namely in conditions in which the moving speed of the fluid flow changes over time, the error introduced by the "Doppler effect" becomes perceptible, and the loss of information due to the fact that the first negative half-wave of the electric signal is not taken into account reduces the accuracy of the end results of the determination of the moving speed of the fluid. All the more so because in this case due to the "Doppler effect" the information on the change in the moving speed of the monitored fluid is carried by the entire signal as a whole, and in the known methods a portion of that information is lost, that is, the fact of the influence of the "Doppler effect" is not taken into account, which reduces the accuracy of the determination of the flow rate of fluid media.

Thus the known methods for measuring the flow rate of fluid media found in the patent search do not, when implemenetd, permit to reach the technical result which lies in an increase of the accuracy of the measurement of the flow rate of fluid media by eliminating the uncertainty caused by the "Doppler effect".

The patent search carried out with regard to the ultrasonic flowmeter (embodiments) implementing the method for measuring the flow rate of fluid media according to the invention showed the following.

An ultrasonic flowmeter is known comprising an assembly for receiving and generating signals including a sounding pulse generator, a receiving-amplifying path, a picodetector, an apparatus for strobing the signal and a comparator, the output of which is the output of the apparatus (Patent RU 2106602, G06F1/66, March 10, 1998).

The apparatus facilitates a reduction of the influence of noise signals on the accuracy of the fluid flow rate measurement by controlling the inputs of the comparator by an apparatus for strobing the signal, namely: Closing the inputs of the picodetector and the comparator after terminating the action of the strobing pulse, which reduces the influence of an accumulation of noise interferences on the accuracy of the measurements. However, the probability of a false comparator response from an impact of outside interferences remains sufficiently high, which makes a precise setting of the reference voltage level on the comparator necessary. Moreover the apparatus does not take account of a possible random instability of the information signal amplitude, caused by the instability of the electrical parameters of the elements of the electric circuit of the flowmeter and the piezo elements, the one forming the ultrasonic wave in the fluid under investigation as well as the one receiving it and converting it into an electric signal.

The necessity to take into account the possibility of an increase of the information signal amplitude at the input of the comparator is explained by the fact that in the process of converting the input information sinusoidal signal into a sequence of unipolar rectangular pulses by the comparator, in the event of an increase of the input signal amplitude a shift of the rising edges of the output signal of the comparator occurs, that is, there is a "zero drift" effect, which leads to an error in the determination of the test signal transmission time. Since the transmission time of the signal along and counter to the flow path of the medium under investigation is very short and totals from several fractions of a nanosecond up to several hundred nanoseconds, the error caused by an amplitude increase of the information signal will be perceptible, which reduces the measuring accuracy.

The most pertinent prior art is an ultrasonic flowmeter comprising a sounding pulse generator, a receiving-amplifying path, a comparator whose information input is connected to the output of the receiving-amplifying path, a controlled switch, a level-forming circuit, a time-measuring circuit, the output of which is the output of the apparatus, wherein the first and second inputs-outputs of the switch are connected to the outputs-inputs of the first and second piezoelectric transducers respectively, the first input of the switch is connected to the output of the sounding pulse generator while the second input is the controlling one, the output of the switch is connected to the input of the receiving-amplifying path, moreover the output of the sounding pulse generator is connected to the first input of the time-measuring circuit, the second input of which and the first input of the level-forming circuit are connected to the comparator output, while the output of the level-forming circuit is connected to the input for setting up the reference signal of the comparator, wherein the second input of the level-forming circuit is the input for setting the circuit to its initial state (Utility Model RU 68148, G06F1/00, November 10, 2007).

The ultrasonic flowmeter which is the most pertinent prior art with respect to the one according to the invention, compared to the above-described prior art, facilitates an increase in the accuracy of measuring the fluid flow rate by eliminating the uncertainty caused by the instability of the information signal amplitude.

However, both prior arts share a shortcoming, namely, for the measurement of the flow rate of fluid media they do not allow to take the error induced by the "Doppler effect" into account.

This is explained as follows. As can be seen from the description of the operation of the apparatuses, in the known apparatuses the piezoelectric transducers convert the ultrasonic signal into an electric one in which the negative half-wave is always the first one. Moreover in both prior arts pertaining to the apparatus according to the invention, the comparator begins to operate at a high voltage level, that is, the analysis of the signal at the information input of the comparator begins with the first positive half-wave of the output signal of the piezoelectric transducer.

Moreover the comparator in the ultrasonic flowmeter that is most pertinent to the apparatus according to the invention, after the first comparison of the electric signal at its information input with a predetermined high voltage level turns to a comparison of the input information signal with a zero voltage level. As a result, the negative half-waves of the electric information signal, including the first negative half-wave, are cut off.

Thus both prior arts, in determining the flow rate of a fluid medium, analyse only the positive half-waves of the electric signals.

The "Doppler effect" lies in the change of the wavelength λ (or the oscillation frequency) perceived by an observer when the source of the waves and the observer move with respect to one another. When the source approaches the observer, λ decreases (and the oscillation frequency increases), while when the distance grows, λ increases (and the oscillation frequency decreases) to a value of λ - λ₀ = λ₀ x V/v, wherein λ₀ is the length of the source wave, v is the wave propagation speed, V is the relative speed of the movement of the source. The Doppler effect renders it possible to measure the speed of movement of a radiation source. (Novaya illustrirovannaya entsiklopediya, Da-Zha, Moscow, OOO "TD Izdatel'stvo Mir knigi, 2006, p. 165.) Thus, since the fluid whose flow rate is determined is moving, in the measuring of its flow rate there is always a "Doppler effect" involved. As a result, the electric signal created by the piezoelectric transducer contains information about the flow rate of the fluid medium taking into account the speed of its movement, in accordance with the "Doppler effect".

In the known apparatuses, as described above, the piezoelectric elements convert the ultrasonic signal into an electric signal, in which the negative half-wave is always the first one, while the analysis of the ultrasonic test signal converted into an electric one begins with its first positive half-wave. Since, as shown above, the "Doppler effect" can manifest itself in an increase of the-osbillation frequency (signal shrinks) as well as in a decrease (signal expands), as a result the beginning of the positive half-wave of the electric signal following the negative half-wave shifts over time, which introduces an uncertainty into the measuring error. In a stationary process, that is, when the moving speed of the fluid is constant and the place where the piezo elements are arranged is constant, this error is the same and is also constant for both piezo transducers and is compensated in the calculation of the flow rate of the monitored fluid medium. However, the transmission time of the signal along and counter to the flow path of the medium under investigation is very small and totals from several fractions of a nanosecond up to several hundred nanoseconds. Hence in a non-stationary process, namely in conditions in which the speed of the moving fluid flow changes over time, the error introduced by the "Doppler effect" becomes perceptible, and the loss of information due to the fact that the first negative half-wave of the electric signal is not taken into account reduces the accuracy of the end results of the determination of the moving speed of the fluid. All the more so because in this case due to the "Doppler effect" the information on the change in the moving speed of the monitored fluid is carried by the entire signal as a whole, and in the known methods a portion of that information is lost.

Thus the ultrasonic flowmeters found in the patent search which constitute the prior art and the most pertinent prior art with regard to the ultrasonic flowmeter according to the invention do not, when realised, facilitate the achievement of the technical result which lies in an increase of the accuracy of the measurement of the flow rate of fluid media by eliminating the uncertainty caused by the "Doppler effect".

The suggested method for measuring the flow rate of fluid media solves the task of creating a corresponding method, the implementation of which renders it possible to reach the technical result which lies in an increase of the accuracy of the measurement of the flow rate of fluid media by eliminating the uncertainty caused by the "Doppler effect".

The essence of the invention lies in that in the method for measuring the flow rate of fluid media, including the emission of an ultrasonic wave along the flow path and counter to it, the conversion of the ultrasonic wave into an electric signal in the form of periodic damping sinusoidal oscillations with its subsequent conversion into a sequence of rectangular pulses with the same amplitude, measuring the transmission time of the ultrasonic waves in both directions, wherein the sequence of rectangular pulses is formed from half-waves of the electric signal which are situated above the axis of symmetry of the signal (positive half-wave), wherein the rising edge of the first pulse is formed at the moment when the first positive half-wave crosses the axis of symmetry as its amplitude rises and until its amplitude reaches its maximum, whereas its falling edge is formed at the moment when the first positive half-wave of the sinusoidal signal crosses the axis of symmetry as its amplitude falls, wherein the rising and falling edges of subsequent rectangular pulses are formed at the moments when the positive half-waves cross the axis of symmetry during the rise and fall of the signal amplitude respectively, the novelty is that the ultrasonic wave is converted into a sinusoidal electric signal in such a way that its first half-wave is always positive.

The technical result is reached as follows.

The features of the method according to the invention included in the claims - emission of an ultrasonic wave along the flow path and counter to it, conversion of the ultrasonic wave into an electric sinusoidal signal in the form of periodic damping sinusoidal oscillations with its subsequent conversion into a sequence of rectangular pulses with the same amplitude, measuring the transmission time of the ultrasonic waves in both directions - are an integral part of the method and facilitate its workability to reach the technical result according to the invention.

The emission of the ultrasonic wave along the flow path and counter to it permits to determine the velocity of the fluid in the flowing part, and consequently its flow rate, since it is known that the difference of the transmission times of the ultrasonic waves in both directions is directly proportional to the velocity of the flow.

In accordance with the above, when the flow rate of a moving fluid medium is measured, there is always the "Doppler effect" involved, which reduces or increases the frequency of the electric signal under investigation. As a result, in accordance with the "Doppler effect", in the method according to the invention the electric signal received as a result of the conversion of the ultrasonic wave contains information on the flow rate of the fluid medium taking into account its moving speed. For the conversion of the ultrasonic wave into the electric signal, piezo elements are widely used. In a conventional connection mode operation (connection of the piezoelectric transducers in an identical manner, for instance "minus" as earthing, "plus" to the charge), due to the particularities of the operation of the piezoelectric element the first half-wave of the electric signal formed by it is always negatives In this case, when only positive values of the information signal are used to measure the flow rate of fluid media, naturally the first negative half-wave is discarded, which leads not only to a reduction in the accuracy of the obtained results but also to a loss of desired information contained in the converted signal. In the method according to the invention, the sequence of rectangular pulses is formed from half-waves of the electric signal which are situated above the axis of symmetry of the signal (positive half-wave), wherein the ultrasonic wave is converted into a sinusoidal electric signal in such a way that its first half-wave is always positive. This allows the formation of a sequence of pulses starting with the first half-wave of the sinusoidal signal under investigation, and consequently allows the formation of a sequence of pulses carrying the information about the transmission time of the ultrasonic waves in both directions along the flow path and counter to it, taking into account the moving speed of the flow, that is, taking into account the "Doppler effect".

Moreover in the method according to the invention, during the conversion of the signal the rising edge of the first pulse is formed at the moment when the first positive half-wave crosses the axis of symmetry as its amplitude rises and until its amplitude reaches its maximum, and its falling edge is formed at the moment when the first positive half-wave of the sinusoidal signal crosses the axis of symmetry as its amplitude falls, and the rising and falling edges of the subsequent rectangular pulses are formed at the moments when the positive half-waves cross the axis of symmetry as the amplitude of the signal rises and falls, respectively. From this it follows that in the method according to the invention, when the amplitude of the sinusoidal signal is unstable, which is expressed in the random character of the increase of the amplitude of the desired signal, the information about the duration of the formed pulses is not lost, since the formation of the rectangular pulse sequence goes along the zero level. As a result, the error introduced into the measurement result due to the "zero drift" effect is prevented, which does not distort the information contained in the electric signal under investigation about the transmission time of the ultrasonic waves in both directions along the flow path and counter to it, taking into account the moving speed of the flow, that is, taking into account the "Doppler effect", and consequently increases the accuracy of the results of the measurement of the flow rate of fluid media.

Moreover, the method according to the invention takes into account the possibility of an increase of the amplitude of the desired signal from an influence of outside interferences due to the fact that the rising edge of the first pulses is formed at the moment when the first positive half-wave crosses the axis of symmetry as its amplitude rises and until its amplitude reaches its maximum, and its falling edge is formed at the moment when the first positive half-wave of the sinusoidal signal crosses the axis of symmetry as its amplitude falls, that is, the formation of the pulses begins before the amplitude of the first half-wave of the electric signal reaches its maximum. This permits to restrict the amplitude of the oscillations of the electric signal, taking into account noise interferences. As a result, in the formed pulse sequence the reliability of the information on the flow rate of the fluid medium taking into account its moving speed, i.e. taking into account the "Doppler effect" is maintained, and consequently the accuracy of the results of the measurement of the flow rate of fluid media is enhanced.

It follows from the above that due to the "Doppler effect" the electric signal obtained as a result of the conversion of the ultrasonic wave contains information on the flow rate of the fluid medium taking into account its moving speed. The error introduced by the "Doppler effect", caused by information losses due to the failure to take the first negative half-wave of the electric signal into account, reduces the accuracy of the end results of the determination of the flow rate of the fluid medium, since the transmission time of the signal along and counter to the flow path of the medium under investigation is very short and amounts from several fractions of a nanosecond to several hundred nanoseconds. This is particularly evident in a non-stationary process, namely in velocity conditions of the moving fluid flow that change over time. Because in the method according to the invention the ultrasonic wave is converted to a sinusoidal electric signal in such a way that its first half-wave is always positive, it is made possible to form a sequence of pulses containing information on the transmission time of the ultrasonic waves in both directions, starting with the first half-wave of the sinusoidal signal under investigation, and consequently it is made possible to form a sequence of pulses carrying information on the transmission time of the ultrasonic waves in both directions along the flow path and counter to it, taking into account the moving speed of the flow, that is, taking into account the "Doppler effect". In other words, the method according to the invention uses, when measuring the flow rate of fluid media, all the information contained in the electric signal obtained as a result of the conversion of the ultrasonic wave, which enhances the accuracy of the results.

As a result, by comparison with' the most pertinent prior art, in which the "Doppler effect" acted as a negative factor reducing the accuracy of the results of the measurement of the flow rate of the fluid medium, in the method according to the invention the "Doppler effect" is a positive factor facilitating an increase of the accuracy of the final measuring results.

Thus it follows from the above that the suggested method for measuring the flow rate of fluid media solves the task of creating a corresponding method, the implementation of which permits to reach the technical result which lies in an increase of the accuracy of the measurement of the flow rate of fluid media by eliminating the uncertainty caused by the "Doppler effect".

The suggested invention "Ultrasonic Flowmeter (Embodiments)", implementing the method for measuring the flow rate of fluid media according to the invention, solves the task of creating a corresponding flowmeter, the realisation of which permits to achieve the technical result which lies in an increase of the accuracy of the measurement of the flow rate of fluid media by eliminating the uncertainty caused by the "Doppler effect".

According to the first embodiment the essence of the invention lies in that an ultrasonic flowmeter comprises a sounding pulse generator, first and second piezoelectric transducers, a receiving-amplifying path, an invertor, a comparator, a controlled switch, a level-forming circuit, a time-measuring circuit, the output of which is the output of the apparatus, wherein the piezoelectric transducers are identically connected to the first and second inputs-outputs of the controlled switch, the first input of which is connected to the output of the sounding pulse generator, and the second input is the controlling one, the output of the switch is connected to the input of the receiving-amplifying path, the output of which is connected via the invertor to the information input of the comparator, moreover the output of the sounding pulse generator is connected to the first input of the time-measuring circuit, the second input of which and the first input of the level-forming circuit are connected to the output of the comparator, and the output of the level-forming circuit is connected to the input for setting the reference signal of the comparator, wherein the second input of the level-forming circuit is the input for setting the circuit to its initial state.

The technical result is achieved as follows.

Due to the connection to the first input of the controlled switch, the sounding pulse generator facilitates the formation of an exciting pulse for the piezoelectric transducers which alternately form an ultrasonic wave along and counter to the flow path in the fluid under investigation and convert the received ultrasonic wave into an electric sinusoidal signal in the form of periodic damping sinusoidal oscillations.

The emission of the ultrasonic wave along the flow path and counter to it permits to determine the velocity of the fluid in the flowing part, and consequently also its flow rate, since it is known that the difference of the transmission times of the ultrasonic waves in both directions is directly proportional to the velocity of the flow.

Since the first and second piezoelectric transducers are identically connected to the first and second inputs-outputs of the controlled switch respectively, the electric signals received as a result of the conversion of the received ultrasonic wave by the piezo elements have the same polarity, namely, the first half-wave of the electric signal is situated below the axis of symmetry of the sinusoidal signal (the first half-wave is negative).

Due to the connection to the first input of the time-measuring circuit, the sounding pulse generator starts the time-measuring circuit simultaneously with the supply of the exciting pulse on the corresponding transducer, thereby fixing the start of the counting of the transmission time of the ultrasonic wave formed by the corresponding piezoelectric transducer through the fluid under investigation.

Under the impact of the control signal received at its control input, the controlled switch facilitates by the signal from the sounding pulse generator an alternate excitation of one of the two piezoelectric transducers, each of which as a result forms an ultrasonic wave in the fluid medium, and a transmission of an electric sinusoidal signal to the receiving-amplifying path of the flowmeter by the other piezoelectric transducer, which signal is obtained as a result of the conversion of the ultrasonic wave received by the latter.

The receiving-amplifying path separates a high-frequency component corresponding to the ultrasonic signal formed in the medium under investigation by the corresponding piezoelectric transducer, and transmits the amplified desired sinusoidal signal in the form of periodic damping sinusoidal oscillations to the input of the invertor. Due to the connection of the invertor output with the information input of the comparator, the inverted signal reaches the information input of the comparator, which signal contains information on the transmission time of the ultrasonic wave through the fluid under investigation in the direction along the flow path or counter to it. The first half-wave is always situated above the axis of symmetry of the sinusoidal signal (the first half-wave is positive).

The input for setting the level-forming circuit to its initial state facilitates, after the supply voltage is switched on, to set it to a state in which a voltage is established at its output corresponding to the initial level of the threshold signal of the comparator. The level-forming circuit, since its output is connected to the input for setting the threshold voltage of the comparator, sets the level of the threshold signal thereon. Since the output of the comparator is connected to the first input of the level-forming circuit, it is possible for the circuit to fix the moment when the amplitude of the information signal at the first input exceeds the reference voltage, and to change the value of the initial level of the reference signal on the comparator to zero at that moment in time.

The comparator forms at its output a sequence of pulses of the same amplitude containing information about the transmission time of the ultrasonic wave in one of the directions: along the flow path or counter to it. Since in the sinusoidal signal under investigation the first half-wave is always situated above the axis of symmetry of the sinusoidal signal (the first half-wave is positive), the comparator creates pulses starting with the first half-wave of the electric signal under investigation.

In accordance with the above, when the flow rate of the moving fluid medium is measured, there is always the "Doppler effect" involved, reducing or increasing the frequency of the electric signal under investigation. As a result, in accordance with the "Doppler effect", in the apparatus according to the invention the electric signal obtained as a result of the conversion of the ultrasonic wave contains information on the flow rate of the fluid medium taking into account its moving speed. It is known that for the conversion of the ultrasonic wave into an electric signal, piezo elements are widely used. In a conventional connection mode operation (identical connection of the piezoelectric transducers, for instance "minus" as earthing, "plus" to the charge), due to the particularities of the operation of the piezoelectric element the first half-wave of the electric signal formed by it is always negative. In this case, when only positive values of the information signal are used to measure the flow rate of fluid media, naturally the first negative half-wave is discarded, which leads not only to a reduction in the accuracy of the obtained results but also to a loss of desired information contained in the converted signal.

In the apparatus according to the invention, due to the introduction of an invertor, the electric signal under investigation reaches the input of the comparator, where the first half-wave of the signal is always positive. As a result, the comparator forms a sequence of pulses of the same amplitude at its output, starting with the first half-wave of the electric signal under investigation. Consequently, the sequence of pulses formed at the output of the comparator carries information on the transmission time of the ultrasonic waves in both directions along the flow path and counter to it, taking into account the moving speed of the flow, that is, taking into account the "Doppler effect". By comparison with the most pertinent prior art, the error introduced into the measuring result by the "Doppler effect" is simultaneously eliminated.

It also follows from the above that in the apparatus according to the invention it is possible to change the level of the threshold voltage of the comparator during conversion of the signal, namely, from the initial positive level to zero. As a result, it is possible to establish a zero level of the reference signal on the comparator after the first comparison of the rising part of the amplitude of the first half-wave of the sinusoidal signal with the size of the initial reference signal of the comparator. At the output of the comparator the falling edge of the first pulse and the leading rising and falling edges of the subsequent rectangular pulses, independently of the size of the amplitude of the information signal, are formed at the moments when the positive half-wave of the sinusoidal information signal passes zero, which prevents a zero drift of the output signal of the comparator. Hence it follows that in the apparatus according to the invention, when there is an instability of the amplitude of the sinusoidal signal expressed in the random character of the amplitude increase of the desired signal, the information on the duration of the formed pulses is not lost, since the formation of the rectangular sequence of pulses goes along the zero level. As a result, the error introduced into the measuring result by the "zero drift" effect is prevented, which does not distort the information contained in the electric signal under investigation about the transmission time of the ultrasonic waves in both directions along the flow path and counter to it, taking into account the moving speed of the flow, that is, taking into account the "Doppler effect", and consequently increases the accuracy of the results of the measurement of the flow rate of fluid media.

The possibility of establishing the required level of the reference voltage on the comparator, due to the connection of the output of the level-forming circuit with the input for setting the reference voltage of the comparator, and to the connection of the comparator output with the first input of the level-forming circuit, permitting to fix, by the level-forming circuit, the moment when the reference voltage is exceeded by the amplitude of the information signal at the first input of the comparator and the change, at that moment in time, of the value of the initial level of the reference signal on the comparator to zero, permits to limit the amplitude of the oscillations of the electric signal at the information input of the comparator, taking into account noise interferences. As a result, in the formed sequence of pulses the reliability of the information on the flow rate of the fluid medium, taking into account its moving speed, that is, taking into account the "Doppler effect", is maintained, and consequently, the accuracy of the results of the measurement of the flow rate of fluid media is increased.

It follows from the above that due to the "Doppler effect", the electric signal obtained as a result of the conversion of the ultrasonic wave contains information on the flow rate of the fluid medium, taking into account its moving speed. The error introduced by the "Doppler effect", caused by losses of information due to the failure to take the first negative half-wave of the electric signal into account, reduces the accuracy of the end results of the determination of the flow rate of the fluid medium, since the transmission time of the signal along the flow path and counter to the flow path of the fluid under investigation is very short and totals from several fractions of a nanosecond up to several hundred nanoseconds. This is particularly evident in a non-stationary process, namely in conditions in which the velocity of the moving fluid flow changes over time. Since in the apparatus according to the invention the ultrasonic wave is converted into a sinusoidal electric signal in such a way that its first half-wave is always positive, due to the possibility of inverting the information signal before it reaches the information input of the comparator, it is possible to form a sequence of pulses containing information about the transmission time of the ultrasonic waves in both directions, starting with the first half-wave of the sinusoidal signal under investigation, and this, in turn, allows the formation of a pulse sequence carrying information about the transmission time of the ultrasonic waves in both directions along the flow path and counter to it, taking into account the moving speed of the flow, that is, taking into account the "Doppler effect". In other words, the flowmeter according to the invention uses, in measuring the flow rate of fluid media, all the information contained in the electric signal obtained as a result of the conversion of the ultrasonic wave, which increases the accuracy of the results.

As a result, by comparison with the most pertinent prior art, in which the "Doppler effect" acted as a negative factor reducing the accuracy of the results of the measurement of the flow rate of the fluid medium, in the flowmeter according to the invention it is a positive factor, permitting to increase the accuracy of the final measurement results.

According to the second embodiment the essence of the invention lies in that the ultrasonic flowmeter comprises a sounding pulse generator, first and second piezoelectric transducers, a receiving-amplifying path, a comparator, a controlled switch, a level-forming circuit, a time-measuring circuit, the output of which is the output of the apparatus, wherein one of the piezoelectric transducers is connected to the corresponding inputs-outputs of the controlled switch by an electrode of opposite polarity with regard to the other transducer, the first input of the controlled switch is connected to the output of the sounding pulse generator while the second input is the controlling one, the output of the switch is connected to the input of the receiving-amplifying path, the output of which is connected to the information input of the comparator, moreover the output of the sounding pulse generator is connected to the first input of the time-measuring circuit, the second input of which and the first input of the level-forming circuit are connected to the output of the comparator, and the output of the level-forming circuit is connected to the input for setting the reference signal of the comparator, wherein the second input of the level-forming circuit is the input for setting the circuit to its initial state.

The technical result is reached as follows. The sounding pulse generator, due to the connection with the first input of the control switch, facilitates the formation of the exciting pulse for the piezoelectric transducers, which alternately form an ultrasonic wave in the fluid under investigation along the flow path and counter to it and convert the received ultrasonic wave into an electric sinusoidal signal in the form of periodic damping sinusoidal oscillations.

The emission of an ultrasonic wave along the flow path and counter to it allows to determine the velocity of the fluid in the flowing part and consequently its flow rate, since it is known that the difference of the transmission times of the ultrasonic waves in both directions is directly proportional to the velocity of the flow.

Since one of the piezoelectric transducers is connected to the corresponding inputs-outputs of the controlled switch by an electrode of opposite polarity with regard to the other transducer, in comparison to the conventional connection of the transducers each of the piezo transducers creates an inverted sinusoidal electric signal in the conversion process of the ultrasonic wave. In this case the first half-wave of the sinusoidal electric signal is always situated above the axis of symmetry of the sinusoidal signal (positive).

Due to the connection with the first input of the time-measuring circuit, simultaneously with the supply of the exciting pulse at the corresponding piezo transducer the sounding pulse generator starts the time-measuring circuit, thereby fixing the start of the counting of the transmission time of the ultrasonic wave formed by the corresponding piezoelectric transducer through the fluid under investigation.

Under the influence of the control signal reaching its control input, the controlled switch facilitates an alternate excitement by the signal from the sounding pulse generator of one of the two piezoelectric transducers, which as a result forms an ultrasonic wave in the fluid medium, as well as the transmission by the other piezoelectric transducer of the electric sinusoidal signal obtained as a result of the conversion of the received ultrasonic wave by said transducer to the receiving-amplifying path of the flowmeter.

The receiving-amplifying path separates a high-frequency component corresponding to the ultrasonic signal formed in the fluid under investigation by the corresponding piezoelectric transducer, and transmits to the information input of the comparator an amplified desired sinusoidal signal in the form of periodic damping sinusoidal oscillations, containing information about the transmission time of the ultrasonic wave through the fluid under investigation in the direction along the flow path or counter to it. The first half-wave is always situated above the axis of symmetry of the sinusoidal signal (the first half-wave is positive).

The input for setting the level-forming circuit to its initial state facilitates, after the supply voltage is switched on, to set it to a state in which a voltage is established at its output corresponding to the initial level of the threshold signal of the comparator. The level-forming circuit, since its output is connected to the input for setting the reference voltage of the comparator, sets the level of the threshold signal thereon. Since the output of the comparator is connected to the first input of the level-forming circuit, it is possible for the circuit to fix the moment when the amplitude of the information signal at the first input exceeds the reference voltage, and to change the value of the initial level of the reference signal on the comparator to zero at that moment in time.

The comparator forms at its output a sequence of pulses of the same amplitude, containing information about the transmission time of the ultrasonic wave in one of the directions: along the flow path or counter to it. Since in the sinusoidal signal under investigation the first half-wave is always situated above the axis of symmetry of the sinusoidal signal (the first half-wave is positive), the comparator forms pulses starting with the first half-wave of the electric signal under investigation.

In accordance with the above, when the flow rate of the moving fluid medium is measured, there is always the Doppler effect involved, reducing or increasing the frequency of the electric signal under investigation. As a result, in accordance with the Doppler effect, in the apparatus according to the invention the electric signal obtained as a result of the conversion of the ultrasonic wave contains information on the flow rate of the fluid medium taking into account its moving speed. It is known that for the conversion of the ultrasonic wave into an electric signal, piezo elements are widely used. In a conventional connection mode operation (identical connection of the piezoelectric transducers, for instance "minus" as earthing, "plus" to the charge), due to the particularities of the operation of the piezoelectric element the first half-wave of the electric signal formed by it is always negative. In this case, when only positive values of the information signal are used to measure the flow rate of fluid media, naturally the first negative half-wave is discarded, which leads not only to a reduction in the accuracy of the obtained results but also to a loss of useful information contained in the converted signal.

As shown above, in the apparatus according to the invention - due to the fact that one of the piezoelectric transducers is connected to the corresponding inputs-outputs of the controlled switch by an electrode of opposite polarity - the electric signal under investigation reaches the comparator input in inverted form, that is, the first half-wave of the signal is always positive. As a result, the comparator forms a sequence of pulse of the same amplitude at its output, beginning with the first half-wave of the electric signal under investigation. Consequently the sequence of pulses formed at the comparator output carries the information about the transmission time of the ultrasonic waves in both directions along the flow path and counter to it, taking into account the moving speed of the flow, that is, taking into account the Doppler effect.

It also follows from the above that in the apparatus according to the invention it is possible to change the level of the threshold voltage of the comparator during conversion of the signal, namely, from the initial positive level to zero. As a result, it is possible to establish a zero level of the reference signal on the comparator after the first comparison of the rising part of the amplitude of the first half-wave of the sinusoidal signal with the size of the initial reference signal of the comparator. At the output of the comparator the falling edge of the first pulse and the leading rising and falling edges of the subsequent rectangular pulses, independently of the size of the information signal amplitude, are formed at the moments when the positive half-wave of the sinusoidal information signal passes zero, which prevents a zero drift of the output signal of the comparator. Hence it follows that in the apparatus according to the invention, when there is an instability of the-amplitude of the sinusoidal signal expressed in the random character of the amplitude increase of the desired signal, the information on the duration of the formed pulses is not lost, since the formation of the rectangular sequence of pulses goes along the zero level. As a result, the error introduced into the measuring result by the "zero drift" effect is prevented, which does not distort the information contained in the electric signal under investigation about the transmission time of the ultrasonic waves in both directions along the flow path and counter to it, taking into account the moving speed of the flow, that is, taking into account the "Doppler effect", and consequently increases the accuracy of the results of the measurement of the flow rate of fluid media.

The possibility of establishing the required level of the reference voltage on the comparator, due to the connection of the output of the level-forming circuit with the input for setting the reference voltage of the comparator, and to the connection of the comparator output with the first input of the level-forming circuit, permitting to fix, by the level-forming circuit, the moment when the reference voltage is exceeded by the amplitude of the information signal at the first input of the comparator and the change, at that moment in time, of the value of the initial level of the reference signal on the comparator to zero, permits to limit the amplitude of the oscillations of the electric signal at the information input of the comparator, taking into account noise interferences. As a result, in the formed pulse sequence the reliability of the information on the flow rate of the fluid medium, taking into account its moving speed, that is, taking into account the "Doppler effect", is maintained, and consequently, the accuracy of the results of the measurement of the flow rate of fluid media is increased.

It follows from the above that due to the Doppler effect, the electric signal obtained as a result of the conversion of the ultrasonic wave contains information on the flow rate of the fluid medium, taking into account its moving speed. The error introduced by the Doppler effect, caused by losses of information due to the failure to take the first negative half-wave of the electric signal into account, reduces the accuracy of the end results of the determination of the flow rate of the fluid medium, since the transmission time of the signal along the flow path and counter to the flow path of the fluid under investigation is very short and totals from several fractions of a nanosecond up to several hundred nanoseconds. This is particularly evident in a non-stationary process, namely in conditions in which the velocity of the moving fluid flow changes over time. Since in the apparatus according to the invention the ultrasonic wave is converted into a sinusoidal electric signal in such a way that its first half-wave is always positive, due to the fact that one of the piezoelectric transducers is connected to the corresponding inputs-outputs of the controlled switch by an electrode of opposite polarity, it is possible to form a sequence of pulses containing information about the transmission time of the ultrasonic waves in both directions, starting with the first half-wave of the sinusoidal signal under investigation, and this, in turn, allows the formation of a pulse sequence carrying information about the transmission time of the ultrasonic waves in both directions along the flow path and counter to it, taking into account the moving speed of the flow, that is, taking into account the "Doppler effect". In other words, the flowmeter according to the invention uses, in measuring the flow rate of fluid media, all the information contained in the electric signal obtained as a result of the conversion of the ultrasonic wave, which increases the accuracy of the results.

As a result, by comparison with the most pertinent prior art, in which the "Doppler effect" acted as a negative factor reducing the accuracy of the results of the measurement of the flow rate of the fluid medium, in the flowmeter according to the invention it is a positive factor, permitting to increase the accuracy of the final measurement results.

Thus it follows from the above that the suggested invention "Ultrasonic Flowmeter (Embodiments)", which implements the method for measuring the flow rate of fluid media according to the application, in its implementation permits to achieve the technical result which lies in an increase of the accuracy of the measurement of the flow rate of fluid media by eliminating the uncertainty caused by the "Doppler effect".

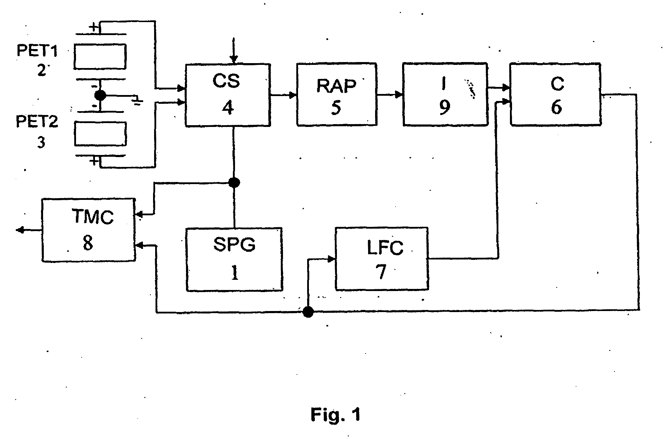

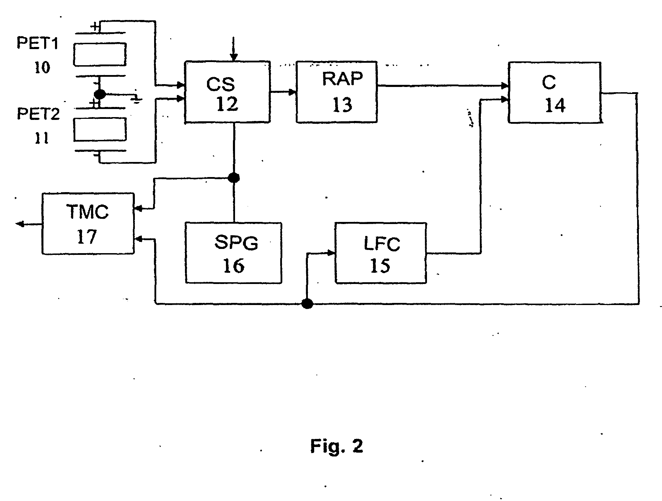

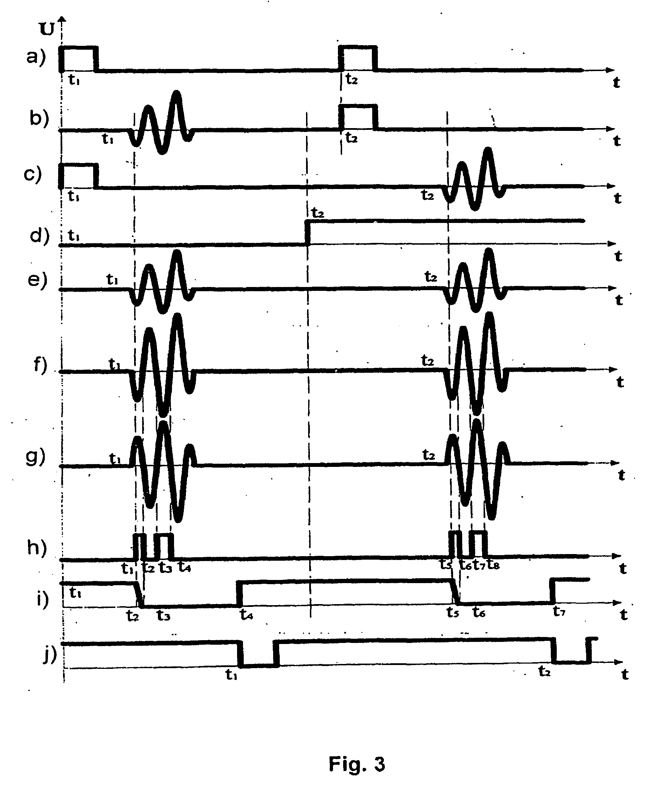

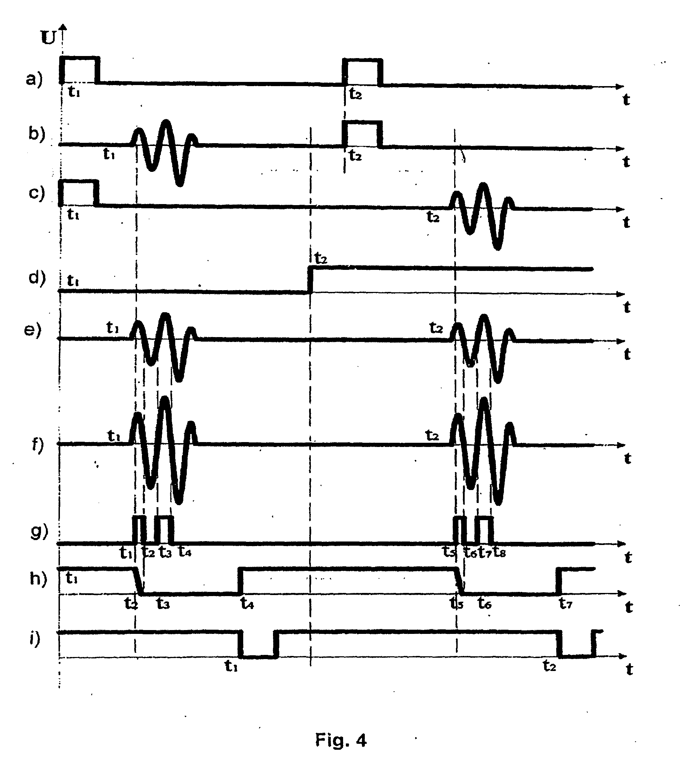

Fig. 1 shows a block diagram of the ultrasonic flowmeter according to the first embodiment of the invention; Fig. 2 shows a block diagram of the ultrasonic flowmeter according to the second embodiment of the invention; Fig. 3 shows time diagrams indicating the operation of the apparatus according to the first embodiment; Fig. 4 shows time diagrams indicating the operation of the apparatus according to the second embodiment.

The ultrasonic flowmeter according to the first embodiment comprises a sounding pulse generator 1 (SPG), piezoelectric transducers 2, 3 (PET), a controlled switch 4 (CS), a receiving-amplifying path 5 (RAP), a comparator 6 (C), a level-forming circuit 7 (LFC) and a time-measuring circuit 8 (TMC), and an invertor 9 (I). The first and second inputs-outputs of CS 4 are connected to the inputs-outputs of the first PET 2, resp. the second PET 3. The first input of CS 4 is connected to the output of SPG 1, and the second input is the controlling one. The output of CS 4 is connected to the input of RAP 5, the output of which is connected to the input of the invertor 9, the output of which is connected to the information input of C 6. Moreover the output of SPG 1 is connected to the first input of TMC 8, the second input of which and the first input of LFC 7 are connected to the output of C 6. The output of LFC 7 is connected to the input for setting the reference signal of C 6, wherein the second input of LFC 7 is the input for setting the circuit 7 to its initial state. The output of TMC 8 is the output of the apparatus.

The level-forming circuit 7 can be executed by analogy to the one indicated in the Utility Model RU 68148, G06F1/00, November 10, 2007, and comprises a trigger D, the inputs S and D being connected to the power supply via a first resistor, the input C being the first input of the circuit 7, the input R being the input for setting the circuit 7 to the initial state, and an inverse output Q is connected to a voltage separator from second and third resistors connected in series, wherein the central point of the separator is the output of the circuit 7. Moreover the voltage separator is provided with a time constant of not more that half the duration of the first positive half-wave of the sinusoidal signal at the information input of the comparator 6.

The piezoelectric transducers 2, 3 are arranged in a section of the tube at an angle to the axis of the tubing with the fluid under investigation (not shown in Fig. 1). In accordance with the connections of the apparatus according to the invention, the piezoelectric transducers 2, 3 are connected to the corresponding inputs-outputs of the switch 4 by analogous electrodes identically: the negative electrodes are connected to the earth, while the positive ones are connected to the inputs-outputs of the controlled switch 4.

The controlled switch 4 can be executed, for instance, on a microcircuit ADG736 comprising two analogous switches. The first input-output of the switch 4 is the first input-output of the first analogous switch and the second input-output of the second analogous switch. The second input-output of the switch 4 is the second input-output of the first analogous switch and the first input-output of the second analogous switch. The control inputs of the switches are linked. The input of the first analogous switch is connected to SPG 1, while the output of the second analogous switch is connected to RAP 5.

From the signal reaching it, RAP 5 separates the high-frequency component corresponding to the ultrasonic wave formed by one of the PETs (2 or 3). RAP can be executed, for instance, on a microcircuit of an AD-8031 operational amplifier.

The invertor can be part of RAP, which in this case can be executed on a microcircuit of the AD-8031 operational amplifier, which is included in the circuit of the inverting amplifier.

The time control of the operation of the apparatus can be executed, for instance, from an outer synchronisation circuit, which can be provided, for instance, on a 74 HC4040 microcircuit.

The ultrasonic flowmeter according to the second embodiment comprises piezoelectric transducers 10, 11 (PET), a controlled switch 12 (CS), a receiving-amplifying path 13 (RAP), a comparator 14 (C), a level-forming circuit 15 (LFC), a sounding pulse generator 16 (SPG) and a time-measuring circuit 17 (TMC). The first and second inputs-outputs of CS 12 are connected to the inputs-outputs of the first PET 10, resp. the second PET 11. The first input of CS 12 is connected to the output of SPG 16, and the second input is the controlling one. The output of CS 12 is connected to the input of RAP 13, the output of which is connected to the information input of C 14. Moreover the output of SPG 16 is connected to the first input of TMC 17, the second input of which and the first input of LFC 15 are connected to the output of C 14. The output of LFC 15 is connected to the input for setting the reference signal of C 14, wherein the second input of LFC 15 is the input for setting the circuit 15 to its initial state. The output of TMC 17 is the output of the apparatus.

In the ultrasonic flowmeter according to the second embodiment, one of the piezoelectric transducers, for instance, the first one 10, is connected to the corresponding inputs-outputs of the controlled switch 12 by an electrode of opposite polarity with regard to the second transducer 11: The positive electrode of the first transducer 10 is connected to the negative electrode of the second transducer 11 and to the earth, while the negative electrode of the first transducer 10 and the positive electrode of the second transducer 11 are connected to the corresponding inputs-outputs of the controlled switch 12.

The level-forming circuit 15 can be executed by analogy to the one indicated in the Utility Model RU 68148, G06F1/00, November 10, 2007, and comprises a trigger D, the inputs S and D being connected to the power supply via a first resistor, the input C being the first input of the circuit 15, the input R being the input for setting the circuit 15 to its initial state, and an inverse output Q is connected to a voltage separator from second and third resistors connected in series, wherein the central point of the separator is the output of the circuit 15. Moreover the voltage separator is provided with a time constant of not more that half the duration of the first positive half-wave of the sinusoidal signal at the information input of the comparator 14.

The piezoelectric transducers 10, 11 are arranged in a section of the tube at an angle to the axis of the tubing with the fluid under investigation (not shown in Fig. 2).

The controlled switch 12 can be executed, for instance, on a microcircuit ADG736 comprising two analogous switches. The first input-output of the switch 12 is the first input-output of the first analogous switch and the second input-output of the second analogous switch. The second input-output of the switch 12 is the second input-output of the first analogous switch and the first input-output of the second analogous switch. The control inputs of the switches are linked. The input of the first analogous switch is connected to SPG 16, while the output of the second analogous switch is connected to RAP 13.

From the signal reaching it, RAP 13 separates the high-frequency component corresponding to the ultrasonic wave formed by one of the PETs (10 or 11). RAP 13 can be executed, for instance, on a microcircuit of an AD-8031 operational amplifier.

The time control of the operation of the apparatus can be executed, for instance, from an outer synchronisation circuit, which can be provided, for instance, on a 74 HC4040 microcircuit.

Both embodiments of the ultrasonic flowmeter use high-frequency piezoelectric transducers. The electrical parameters of the piezoelectric transducers are chosen based on the physical properties of the medium under investigation and the electrical parameters of the other elements of the electric circuit of the flowmeter.

The method for measuring the flow rate of fluid media is carried out as follows. An ultrasonic wave is emitted along the flow path and counter to it. The ultrasonic wave is converted into an electric signal in the form of periodic damping sinusoidal oscillations, and further into a sequence of rectangular pulses with the same amplitude. The ultrasonic wave is converted into a sinusoidal electric signal in such a way that its first half-wave is always positive. The transmission time of the ultrasonic waves in both directions is measured. The sequence of rectangular pulses is formed from the half-waves of the electric signal situated above the axis of symmetry of the signal (positive half-wave), wherein the leading edge of the first pulse is formed at the moment when the first positive half-wave crosses the axis of symmetry as its amplitude rises and until its amplitude reaches its maximum, whereas its falling edge is formed at the moment when the first positive half-wave of the sinusoidal signal crosses the axis of symmetry as its amplitude falls. The rising and falling edges of subsequent rectangular pulses are formed at the moments when the positive half-waves cross the axis of symmetry correspondingly during the rise and fall of the signal amplitude.

The method is implemented by means of the ultrasonic flowmeter (embodiments) according to the invention.

According to the first embodiment, the ultrasonic flowmeter implementing the method for measuring the flow rate of fluid media according to the invention works as follows.

Under the impact of the strobing pulse (Fig 3d, t₁), the switch 4 connects the second piezoelectric transducer 3 to RAP 5. SPG 1 simultaneously sends a signal (Fig. 3a, t₁) to the first input of the time-measuring circuit 6 and to the input of the second piezoelectric transducer 3 (Fig. 3c, t₁), which forms the ultrasonic pulse propagated in the medium under investigation. The ultrasonic pulse passes the measuring portion and is received by the first piezoelectric transducer 2 which in this case is the receiver. As a result, at the output of the first transducer 2 an electric signal is created in the form of periodic damping sinusoidal oscillations (Fig. 3b, t₁), which reaches RAP 5 through the switch (Fig. 3e, t₁). RAP 5 separates the high-frequency component from the signal and amplifies. Further, the signal reaches the invertor 9, is inverted and reaches the information input of the comparator 6 (Fig. 3f, t₁). At the input for setting the reference signal of the comparator 6 the level-forming circuit 7 sets the predetermined level of the reference signal (Fig. 3h, t₁ - t₂). When the input signal exceeds the initial level of the reference signal, the level-forming circuit 7 changes the value of the reference signal level to zero (Fig. 3h, t₃). The comparator 6 converts the bipolar sinusoidal signal into a sequence of unipolar rectangular pulses of the same amplitude (Fig. 3g, t₁, t₂, t₃, t₄). At the output of the comparator 6 the first rectangular pulse is formed with a leading edge corresponding to the moment when the signal is equal to the initial level of the reference signal, and the trailing edge corresponding to the moment when the sinusoidal signal passes through zero from the positive into the negative zone. Further, the leading and trailing edges of the rectangular pulses are formed at the moments when the positive half-wave of the sinusoidal information signal passes through zero.

The formed pulse sequence reaches the second input of the time-measuring circuit 8, which fixes the time between emission and reception of the sound pulse, converting the sequence of rectangular pulses formed by the comparator 6 into a digital code corresponding to the signal transmission time through the acoustic path.

Subsequently, at a strobing pulse (Fig. 3d, t₂) reaching the control input of the switch 4, CS 4 connects the first piezoelectric transducer 2 to RAP 5. SPG 1 simultaneously emits a signal (Fig. 3a, t₂) to the first input of TMC 8 and to the input of the first PET 2 (Fig. 3b, t₂). Further, the operation of the apparatus continues.

According to the second embodifni₋-iit, the ultrasonic flowmeter according to the invention, implementing the method for measuring the flow rate of liquid media according to the invention works as follows.

Under the impact of the strobing pulse (Fig. 4d, t₁), the switch 12 connects the second piezoelectric transducer 11 to RAP 13. SPG 16 simultaneously sends a signal (Fig. 4a, t₁) to the first input of the time-measuring circuit 17 and to the input of the second piezoelectric transducer 11 (Fig. 4c, t₁), which forms the ultrasonic pulse propagated in the medium under investigation. The ultrasonic pulse passes the measuring portion and is received by the first piezoelectric transducer 10 which in this case is the receiver. Since the piezoelectric transducers 10, 11 are connected to the corresponding inputs-outputs of the controlled switch by an electrode with opposite polarity with regard to each other, as a result at the output of the first transducer 10 an electric signal is created in the form of damping sinusoidal oscillations with a positive first half-wave (Fig. 4b, t₁), which reaches RAP 13 through the switch 12 (Fig. 4e, t₁). RAP 13 separates the high-frequency component from the signal and amplifies. Further, the signal reaches the information input of the comparator 14 (Fig. 4f, t₁). At the input for setting the reference signal of the comparator 14 the level-forming circuit 15 sets the predetermined level of the reference signal (Fig. 4h, t₁ - t₂). When the input signal exceeds the initial level of the reference signal, the level-forming circuit changes the value of the reference signal level to zero (Fig. 4h, t₃). The comparator 14 converts the bipolar sinusoidal signal into a sequence of unipolar rectangular pulses of the same amplitude (Fig. 4g, t₁, t₂, t₃, t₄). At the output of the comparator 14 the first rectangular pulse is formed with a leading edge corresponding to the moment when the signal is equal to the initial level of the reference signal, and the trailing edge corresponding to the moment when the sinusoidal signal passes through zero from the positive into the negative zone. Further, the leading and trailing edges of the rectangular pulses are formed at the moments when the positive half-wave of the sinusoidal information signal passes through zero.

The formed pulse sequence reaches the second input of the time-measuring circuit 17 which fixes the time between emission and reception of the sound pulse, converting the sequence of rectangular pulses formed by the comparator 14 into a digital code corresponding to the signal transmission time through the acoustic path.

Subsequently, at a-strobing pulse (Fig. 4d, t₂) reaching the control input of the switch 12, CS 12 connects the first piezoelectric transducer 10 to RAP 13. SPG 16 simultaneously emits a signal (Fig. 4a, t₂) to the first input of TMC 17 and to the input of the first PET 10 (Fig. 4b, t₂). Further, the operation of the apparatus continues.

In the first and second embodiment of the flowmeter for obtaining a rectangular pulse sequence at the output of the comparator, which bears the maximum correspondence to the true form of the desired sinusoidal signal at the information input of the comparator, the zero level of the reference signal is set equal to the voltage at the information input of the comparator when the electric sinusoidal signal is absent

## Claims

1. Method for measuring the flow rate of fluid media, comprising the emission of an ultrasonic wave along the flow path and counter to it, the conversion of the ultrasonic wave into an electric signal in the form of periodic damping sinusoidal oscillations with its subsequent conversion into a sequence of rectangular pulses with the same amplitude, measuring the transmission time of the ultrasonic waves in both directions, wherein the sequence of rectangular pulses is formed from half-waves of the electric signal, which are situated above the axis of symmetry of the signal (positive half-wave), wherein the rising edge of the first pulse is formed at the moment when the first positive half-wave crosses the axis of symmetry as its amplitude rises and until its amplitude reaches its maximum, whereas its falling edge is formed at the moment when the first positive half-wave of the sinusoidal signal crosses the axis of symmetry as its amplitude falls, wherein the rising and falling edges of subsequent rectangular pulses are formed at the moments when the positive half-waves cross the axis of symmetry during the rise and fall of the signal amplitude respectively, **characterised in that** the ultrasonic wave is converted into a sinusoidal electric signal in such a way that its first half-wave is always positive.

2. An ultrasonic flowmeter comprises a sounding pulse generator, first and second piezoelectric transducers, a receiving-amplifying path, an invertor, a comparator, a controlled switch, a level-forming circuit, a time-measuring circuit, the output of which is the output of the apparatus, wherein the piezoelectric transducers are identically connected to the first and second inputs-outputs of the controlled switch, the first input of which is connected to the output of the sounding pulse generator, and the second input is the controlling one, the output of the switch is connected to the input of the receiving-amplifying path, the output of which is connected via the invertor to the information input of the comparator, moreover the output of the sounding pulse generator is connected to the first input of the time-measuring circuit, the second input of which and the first input of the level-forming circuit are connected to the output of the comparator, and the output of the level-forming circuit is connected to the input for setting the reference signal of the comparator, wherein the second input of the level-forming circuit is the input for setting the circuit to its initial state.

3. An ultrasonic flowmeter comprises a sounding pulse generator, first and second piezoelectric transducers, a receiving-amplifying path, a comparator, a controlled switch, a level-forming circuit, a time-measuring circuit, the output of which is the output of the apparatus, wherein one of the piezoelectric transducers is connected to the corresponding inputs-outputs of the controlled switch by an electrode of opposite polarity with regard to the other transducer, the first input of the controlled switch is connected to the output of the sounding pulse generator while the second input is the controlling one, the output of the switch is connected to the input of the receiving-amplifying path, the output of which is connected to the information input of the comparator, moreover the output of the sounding pulse generator is connected to the first input of the time-measuring circuit, the second input of which and the first input of the level-forming circuit are connected to the output of the comparator, and the output of the level-forming circuit is connected to the input for setting the reference signal of the comparator, wherein the second input of the level-forming circuit is the input for setting the circuit to its initial state.
